# EUROPÄISCHE PATENTANMELDUNG

(11) **EP 1 832 557 A1**
(43) Veröffentlichungstag der Anmeldung: **12.09.2007**
(21) Anmeldenummer: 06015700.5
(22) Anmeldetag: 27.07.2006
(51) Int. Cl.: C02F 11/12

(54) **Vorrichtung mit mehreren, verstellbaren Schlammablauföffnungen zur Desintegration von Schlämmen**

(30) Priorität: 09.03.2006 DE 102006011030
(71) Anmelder: Linde Aktiengesellschaft, 65189 Wiesbaden (DE)
(72) Erfinder: Blaschek, Reimut, 82538 Geretsried (DE); Bomhard, Ilse, 82418 Murnau (DE)

(57) **Zusammenfassung**

Es wird eine Vorrichtung zur Desintegration von Biomasse enthaltenden Schlämmen mit einem Hochdruckreaktor beschrieben, der einen Schlammzulauf für zu behandelnden Schlamm und einen Schlammablauf (2) für behandelten Schlamm sowie eine Gaszuleitung für ein unter Druck stehendes Gas aufweist. Zur Verstärkung der Desintegrationswirkung wird vorgeschlagen, dass der Schlammablauf (2) mehrere Öffnungen (3) mit verstellbaren Öffnungsquerschnitten für den Austritt des behandelten Schlamms aufweist.

## Beschreibung

Die Erfindung betrifft eine Vorrichtung zur Desintegration von Biomasse enthaltenden Schlämmen mit einem Hochdruckreaktor, der einen Schlammzulauf für zu behandelnden Schlamm und einen Schlammablauf für behandelten Schlamm sowie eine Gaszuleitung für ein unter Druck stehendes Gas aufweist.

Bei der biologischen Abwasser- oder Abfallbehandlung oder sonstigen Methoden zur biologischen Behandlung von biologisch abbaubare Substanzen enthaltenden Medien entstehen in der Regel Biomasse enthaltende Schlämme, z.B. Klärschlämme oder Faulschlämme, welche entsorgt werden müssen. Um das Schlammvolumen zu verringern sind bereits verschiedene Verfahren zur sogenannten Desintegration von Schlämmen vorgeschlagen worden, bei denen z.B. der Klär- oder Faulschlamm durch Einwirkung äußerer physikalischer, chemischer oder biologischer Kräfte zerkleinert wird. Die Einwirkung der Kräfte führt zu einem Schlammaufschluss mit dem Ziel einer besseren Entwässerbarkeit. Der Grad der Zerkleinerung des Schlamms hängt u.a. vom eingesetzten Verfahren, der eingesetzten Energie und den Eigenschaften des Schlammes ab. Bei geringen Energieeinträgen findet vornehmlich nur eine Flockenzerstörung statt, bei hohen Energieeinträgen eine Flockenzerstörung und ein Aufschluss der Mikroorganismen.

Am weitesten verbreitet sind mechanische Methoden zur Desintegration von Klärschlämmen, bei denen die Schlämme beispielsweise in Rührwerkskugelmühlen behandelt werden, wobei aufgrund der mechanischen Kräfte die Zellwände der Mikroorganismen im Schlamm aufgebrochen werden. Bekannt ist auch der Einsatz von Ultraschallhomogenisatoren, Hochdruckhomogenisatoren, Hochleistungspulstechnik, Lysat-Zentrifugentechnik und Prallstrahlverfahren. Allen diesen Methoden gemeinsam ist die Zielsetzung, durch Einwirkung von Kräften ein Freisetzen von Zellinhaltsstoffen zu erreichen, um den Schlamm weitergehender als bisher zu stabilisieren bzw. zu mineralisieren. Auch eine Bekämpfung von Schaumproblemen soll mit diesen Methoden erreicht werden. Konkrete Einsatzgebiete sind die Verbesserung der anaeroben Stabilisierung, die Bereitstellung von internen Kohlenstoffquellen für die Denitrifikation und die verbesserte Absetzbarkeit von Schlämmen, insbesondere Blähschlämmen. Die Klärschlammdesintegration ist ein Verfahrensschritt, der auf kommunalen Kläranlagen bisher jedoch nur vereinzelt angewandt wird.

Neben der mechanischen Klärschlammdesintegration sind noch folgende Desintegrationsverfahren bekannt:

Bei thermischen Verfahren werden die Schlämme üblicherweise Temperaturen von über 100 Grad Celsius ausgesetzt, wobei die Zellwände der Mikroorganismen zerstört werden. Chemische Verfahren, z.B. Nassoxidation, Ozonbehandlung, Wasserstoffperoxidbehandlung, alkalische und saure Hydrolyse, haben das Ziel, einen chemischen Aufschluss der Zellen zu bewirken. Schließlich werden vereinzelt auch biochemische Verfahren angewandt, bei denen beispielsweise durch Enzymbildung eine Hydrolyse durchgeführt wird.

Die bisher üblichen Verfahren zur Schlammdesintegration erfordern eine relativ komplizierte Technik, einen hohen Energiebedarf und hohe Investitionskosten.

In der nicht vorveröffentlichten DE 102 004 0427 73.9 ist auch schon ein Verfahren vorgeschlagen worden, bei dem der Schlamm in einen Hochdruck-Reaktionsbehälter eingefüllt und in den Hochdruck-Reaktionsbehälter ein Gas oder Gasgemisch eingeleitet wird. Im Hochdruck-Reaktionsbehälter wird ein derart hoher Druck aufrechterhalten, dass das Gas oder Gasgemisch in die Biomasse diffundiert. Durch plötzliches Entspannen des Hochdruck-Reaktionsbehälters fällt die Gaskonzentration in der wässrigen Phase ab, so dass in der Biomasse ein Gasüberdruck entsteht, der zu einem Aufschließen der Biomasse führt. Beispielsweise werden die Zellmembranen von in der Biomasse enthaltenen Zellen zum Platzen gebracht, so dass die Zellinhaltsstoffe freigesetzt werden. Dadurch wird beispielsweise die Entwässerbarkeit des Schlamms deutlich verbessert.

Der vorliegenden Erfindung liegt die Aufgabe zugrunde, eine Vorrichtung der eingangs genannten Art so auszugestalten, dass auf wirtschaftliche Weise eine hohe Desintegrationswirkung erreichbar ist.

Diese Aufgabe wird erfindungsgemäß dadurch gelöst, dass der Schlammablauf mehrere Öffnungen mit verstellbaren Öffnungsquerschnitten für den Austritt des behandelten Schlammes aufweist.

Der Erfindung liegt die Erkenntnis zugrunde, dass die mechanische Zerstörung der Zellmembranen im Schlamm von folgenden Punkten stark abhängig ist:

Der Schlamm muss innerhalb kürzester Zeit vom Betriebsdruck des Hochdruckreaktors auf den Umgebungsdruck entspannt werden. Außerdem sollten zusätzliche Scherkräfte durch Kavitationseffekte in den Austrittsöffnungen und ggf. an einer Prallplatte hinter den Austrittsöffnungen erzeugt werden.

Die erfindungsgemäße Vorrichtung erlaubt eine Entspannung des unter hohem Druck stehenden Schlamms über verstellbare Öffnungen. Dabei sind in den Schlammablauf zweckmäßigerweise übereinandergelegte, gegeneinander verdrehbare Lochplatten eingebaut, so dass eine Verstellbarkeit der Öffnungsquerschnitte gegeben ist. Außerdem ist bevorzugt in Austrittsrichtung hinter den Öffnungen eine aus Prallringen gebildete Pralleinrichtung angeordnet.

Dadurch werden optimale Bedingungen für eine Zerstörung der Zellmembranen im Schlamm geschaffen. Aufgrund der Verstellbarkeit der Öffnungen kann der gewünschte Aufschlussgrad z.B. für Klärschlämme zwischen 0,3 bis 10% Trockensubstanz eingestellt werden. Außerdem kann die Austrittsgeschwindigkeit des behandelten Schlammes aus dem Hochdruckreaktor in einem Bereich von z.B. 5 bis 100m pro Sekunde eingestellt werden. Bei einem Verdrehen der übereinander gelegten Lochplatten entstehen ovale Öffnungen, die gegenüber runden Öffnungen längere Abreißkanten bieten, wodurch größere Scherkräfte auf den Schlamm ausgeübt werden können.

Gemäß einer Weiterbildung des Erfindungsgedankens sind an den Prallringen zusätzliche Abreißkanten angebracht, um zusätzliche Scherkräfte zu erzeugen.

Eine besonders bevorzugte Ausgestaltung der Erfindung sieht vor, dass die Pralleinrichtung konzentrisch hintereinander angeordnete Prallringe mit unterschiedlichen Durchmessern aufweist. Dabei nehmen die Durchmesser der Prallringe zweckmäßigerweise in Austrittsrichtung zu. Bei vorzugsweise gleich bleibender Ringbreite ergibt sich aufgrund des zunehmenden Innenringdurchmessers eine Vergrößerung der inneren Durchtrittsfläche des behandelten Schlamms. Dadurch wird ein schneller Abfluss des desintegrierten Schlamms zwischen den Prallringen aufgrund des geringen Staudrucks ermöglicht.

Die Erfindung weist eine Reihe von Vorteilen auf:

Bei Verwendung einer verstellbaren Lochplatte sind die Austrittsöffnungen für den Austritt des Schlamms aus dem Hochdruckreaktor auch während des Betriebes verstellbar. Dadurch kann jederzeit eine Anpassung an betriebliche Erfordernisse erfolgen. Die Desintegrationsvorrichtung ist darüber hinaus aufgrund einer Vielzahl von Öffnungen mit großem Querschnitt (voller Durchgang) verstopfungsfrei, wodurch die Wartungskosten verringert werden können. Wegen der hohen Anzahl von scharfen Umlenkungen an den Austrittsöffnungen und den Prallringen werden besonders hohe Scherkräfte auf den Schlamm ausgeübt, was für eine hohe Desintegrationswirkung sorgt. Außerdem ergibt sich durch den großen Abflussquerschnitt ein geringer Staudruck, wodurch ein schneller Abfluss des desintegrierten Schlamms gewährleistet ist.

Im Folgenden soll die Erfindung anhand von in den Figuren schematisch dargestellten Ausführungsbeispielen näher erläutert werden:

Es zeigen:
- Figur 1: einen Längsschnitt durch eine Schlammabzugseinrichtung
- Figur 2: einen Querschnitt einer Lochplatte mit vollem Durchgang
- Figur 3: einen Querschnitt einer Lochplatte in angedrosseltem Betriebszustand

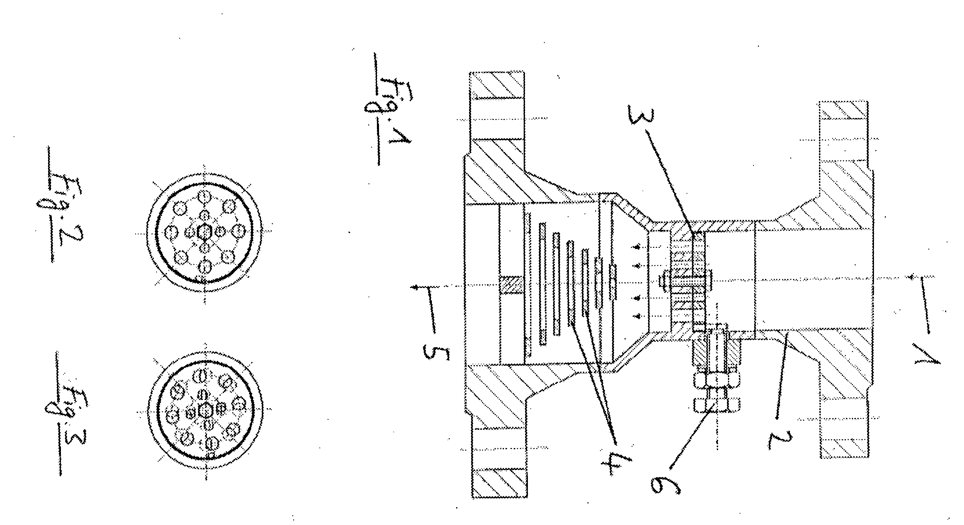

In Figur 1 ist eine Schlammablaufeinrichtung dargestellt, die an einen in der Figur nicht gezeigten Hochdruckreaktor angeschlossen ist. Im vorliegenden Beispiel soll die Vorrichtung zur Desintegration von Klärschlämmen dienen. Der in dem Hochdruckreaktor behandelte Klärschlamm wird in Pfeilrichtung 1 in den Schlammablauf 2 eingeleitet. Im Schlammablauf 2 sind übereinandergelegte, gegeneinander verdrehbare Lochplatten 3 eingebaut. Die Lochplatten sind mittels einer Verstellschraube 6 von außen zu verdrehen. Der durch die Lochplatten hindurchgetretene Klärschlamm trifft auf die Prallringe 4, die konzentrisch hintereinander angeordnet sind. Die Durchmesser der Prallringe nehmen in Austrittsrichtung zu. Aufgrund der durch die Lochplatten und die Prallringe ausgeübten Scherkräfte wird die Desintegrationswirkung der gesamten Vorrichtung verbessert. Der desintegrierte Klärschlamm verlässt schließlich die Vorrichtung in Pfeilrichtung 5.

In Figur 2 sind die übereinander gelegten Lochplatten im Querschnitt gezeigt, wobei die Öffnungen deckungsgleich übereinander liegen, so dass ein voller Durchgang des Klärschlamms erreicht wird.

In Figur 3 sind dieselben Lochplatten im angedrosselten Betriebszustand dargestellt. Durch Verdrehen der Lochplatten verringern sich die Öffnungsquerschnitte und es entstehen aus den kreisrunden Öffnungen ovale Öffnungen, die größere Scherkräfte auf den Klärschlamm ausüben.

## Patentansprüche

1. Vorrichtung zur Desintegration von Schlämmen mit einem Hochdruckreaktor, der einen Schlammzulauf für zu behandelnden Schlamm und einen Schlammablauf für behandelten Schlamm sowie eine Gaszuleitung für ein unter Druck stehendes Gas aufweist, **dadurch gekennzeichnet, dass** der Schlammablauf (2) mehrere Öffnungen mit verstellbaren Öffnungsquerschnitten für den Austritt des behandelten Schlamms aufweist.

2. Vorrichtung nach Anspruch 1, **dadurch gekennzeichnet, dass** in den Schlammablauf (2) übereinander gelegte, gegeneinander verdrehbare Lochplatten (3) eingebaut sind, so dass eine Verstellbarkeit der Öffnungsquerschnitte gegeben ist.

3. Vorrichtung nach Anspruch 1 oder 2, **dadurch gekennzeichnet, dass** in Austrittsrichtung hinter den Öffnungen eine aus Prallringen (4) gebildete Pralleinrichtung angeordnet ist.

4. Vorrichtung nach Anspruch 3, **dadurch gekennzeichnet, dass** an den Prallringen (4) zusätzliche Abreißkanten angebracht sind.

5. Vorrichtung nach Anspruch 3 oder 4, **dadurch gekennzeichnet, dass** die Pralleinrichtung konzentrisch hintereinander angeordnete Prallringe (4) mit unterschiedlichen Durchmessern aufweist.

6. Vorrichtung nach Anspruch 5, **dadurch gekennzeichnet, dass** die Durchmesser der Prallringe (4) in Austrittsrichtung zunehmen.
